# EUROPEAN PATENT SPECIFICATION

(11) **EP 3 053 739 B1**
(45) Date of publication and mention of the grant of the patent: **19.06.2024**
(21) Application number: 14848767.1
(22) Date of filing: 30.09.2014
(51) Int. Cl.: B32B 27/30, B29C 45/14, B29C 51/10, B32B 27/00, B29L 9/00, C08J 7/04, C08L 69/00

(54) **DECORATIVE SHEET, DECORATIVE RESIN MOLDED ARTICLE, AND MANUFACTURING METHOD FOR DECORATIVE RESIN MOLDED ARTICLE**
DEKORFOLIE, DEKORATIVER HARZFORMARTIKEL UND HERSTELLUNGSVERFAHREN FÜR DEKORATIVEN HARZFORMARTIKEL
FEUILLE DÉCORATIVE, ARTICLE DÉCORATIF MOULÉ EN RÉSINE, ET PROCÉDÉ DE FABRICATION POUR ARTICLE DÉCORATIF MOULÉ EN RÉSINE

(30) Priority: 30.09.2013 JP 2013204234
(43) Date of publication of application: 10.08.2016
(73) Proprietor: Dai Nippon Printing Co., Ltd., Tokyo 162-8001 (JP)
(72) Inventor: AWA, Megumi, Tokyo 162-8001 (JP); SAITOU, Nobuo, Tokyo 162-8001 (JP); KATAOKA, Sakie, Tokyo 162-8001 (JP); KOIKE, Hideaki, Tokyo 162-8001 (JP)
(74) Representative: Beck Greener LLP
(86) International application number: PCT/JP2014/076080
(87) International publication number: WO 2015/046568

(56) References cited:
- WO-A1-2009/150954
- WO-A1-2012/101820
- JP-A- H0 478 534
- JP-A- H0 494 936
- JP-A- H07 195 625
- JP-A- H08 281 896
- JP-A- 2000 024 582
- JP-A- 2005 307 133
- JP-A- 2012 076 354
- JP-A- 2012 218 276
- JP-A- 2012 218 276
- JP-A- 2013 082 217
- JP-A- 2014 193 535
- US-A1- 2010 009 135
- DATABASE WPI Week 201332 Thomson Scientific, London, GB; AN 2013-G96003 XP002768445, & JP 2013 082216 A (DAINIPPON PRINTING CO LTD) 9 May 2013 (2013-05-09)
- DATABASE WPI Week 201333 Thomson Scientific, London, GB; AN 2013-G95999 XP002768446, & JP 2013 082217 A (DAINIPPON PRINTING CO LTD) 9 May 2013 (2013-05-09)

## Description

### TECHNICAL FIELD

The present invention relates to a decorative sheet having high moldability and scratch resistance, and a high three-dimensional feeling, a decorative resin molded article obtained using the decorative sheet, and a method for producing the same.

### BACKGROUND ART

Decorative resin molded articles with a decorative sheet laminated on the surface of a resin molded article have been used heretofore in vehicle interior and exterior components, building interior materials, cases for home electric appliances, and the like. In production of such a decorative resin molded article, for example, a molding method is used in which a decorative sheet given a design beforehand is integrated with a resin by injection molding. As a typical example of the method for producing such a decorative resin molded article, for instance, an insert molding method etc. is known. The insert molding method is a method in which a decorative sheet is molded into a three-dimensional shape beforehand using a vacuum molding die, the decorative sheet is inserted into an injection molding die, and a fluidized resin is injected into the injection molding die to integrate the resin with the decorative sheet.

Some decorative resin molded articles have a complicated surface shape such as a three-dimensional curved surface. Accordingly, decorative sheets are required to have three-dimensional moldability which ensures that the decorative sheet can sufficiently follow the shape of a decorative resin molded article. Decorative sheets are used as a surface material of a decorative resin molded article, and therefore also required to have surface characteristics such as scratch resistance. Further, with the consumers' preference for high-grade goods in recent years, decorative resin molded articles are required to present a design having a high-grade feeling with a three-dimensional feeling being recognizable in visual observation of the external appearance.

Techniques for imparting excellent moldability and scratch resistance and an excellent design property with a high three-dimensional feeling to a decorative sheet have been heretofore reported. For example, Patent Document 1 discloses a decorative sheet including on a base material at least a surface protective layer and a transparent resin layer partially provided on the surface protective layer, and also discloses a method for imparting a three-dimensional feeling to the decorative sheet by means of a gloss difference between the partially provided transparent resin layer and the surface protective layer, and an irregularity shape. For example, Patent Document 1 also discloses a method for imparting a sense of reality to a woodgrain pattern by matching a conduit portion of the woodgrain pattern of a pattern layer and a portion in which a transparent resin layer is absent.

However, conventional decorative sheets have the problem that an irregularity shape formed on a transparent resin layer becomes gentle or small under heat and pressure during injection molding in an insert molding method etc., or during preceding premolding (vacuum molding), and thus a high three-dimensional feeling presented in the decorative sheet is easily impaired.

### PRIOR ART DOCUMENT

### PATENT DOCUMENT

Patent Document 1: Japanese Patent Laid-open Publication No. 2009-113387
US2010/009135 discloses a decorative sheet that contains a substrate having thereon at least a pattern layer, a homogeneous and uniform first surface protective layer covering the whole surface, and a second surface protective layer provided partly on the first surface protective layer, the first surface protective layer and the second surface protective layer each contain a curable resin composition having been crosslinked and cured. The first surface protective layer contains a matte agent, the second surface protective layer contains synthetic resin beads having an average particle diameter of from 10 to 30 mum, the synthetic resin beads protrude above a resin layer constituting the second surface protective layer, a region of the second surface protective layer and a region of the first surface protective layer exposed on the outermost surface have a difference in glaze, and the difference in glaze is conformed to a pattern of the pattern layer. Such a decorative sheet can be provided that has a pattern formed on the surface thereof, has a difference in glaze corresponding to the pattern, in which the difference in glaze is visually recognized as a concave part, and has a relief appearance on the surface thereof, and the decorative sheet also has wood surface texture.
WO-A-2012/101820 discloses a decorative sheet having a surface protection layer that affords scratch-resistance and three-dimensional moldability. The decorative sheet has at least a surface protection layer on a substrate, the surface protection layer comprising a cured product of an ionizing-radiation-curable resin composition containing at least a polycarbonate (meth)acrylate (A) and a polyfunctional (meth)acrylate (B), where the ratio (A)/(B) expressed in terms of weight is (98/2) to (70/30). The surface protection layer of the decorative sheet comprises a cured product of an ionizing-radiation-curable resin composition containing at least acrylic-silicone (meth)acrylate (C) and a polyfunctional (meth)acrylate (B), where the ratio (C)/(B) expressed in terms of weight is (50/50) to (95/5).
JP2013/082216 discloses a decorative sheet, a method of manufacturing the same, and a decorative molded article. The sheet includes at least a colored layer, a primer layer, and a surface protective layer on a base material in this order. The surface protective layer is a cured material of an ionizing radiation-curable resin composition. The primer layer is a cured material of a primer composition containing polyol and isocyanate. Further, a glass transition temperature Tg of the polyol is 55°C or more, and its hydroxyl value is 30-130 mgKOH/g.
JP2013/082217 discloses a decorative sheet including at least a colored layer, a primer layer, and a surface protective layer on a base material in this order. The surface protective layer is a cured material of an ionizing radiation-curable resin composition. The primer layer is a cured material of a primer composition containing polyol and isocyanate. Further, a glass transition temperature Tg of the polyol is ≥55°C, and its weight average molecular weight in terms of standard polystyrene is 1,000-100,000.

### SUMMARY OF THE INVENTION

### PROBLEMS TO BE SOLVED BY THE INVENTION

A main object of the present invention is to provide a decorative sheet having high moldability and scratch resistance, and a high three-dimensional feeling when molded into a decorative resin molded article.

### MEANS FOR SOLVING THE PROBLEM

In order to achieve the above-mentioned object, the present inventors have extensively conducted studies. The invention is defned in the appended claims. The present inventors have found that a decorative sheet including at least a base material layer, a first protective layer, and a second protective layer provided on a part of the first protective layer, in this order, wherein the first protective layer is formed of an ionizing radiation curable resin composition containing a polyfunctional polycarbonate (meth)acrylate, and wherein the sheet comprises a third protective layer provided under the first protective layer, wherein the third protective layer is formed of an ionizing radiation curable resin composition, has high moldability and scratch resistance, and has a high three-dimensional feeling when molded into a decorative resin molded article. The present invention is an invention that has been completed by further conducting studies based on the above-mentioned findings.

### ADVANTAGES OF THE INVENTION

According to the decorative sheet of the present invention, there can be provided a decorative sheet which has high moldability and scratch resistance, and is capable of imparting a high design property to a decorative resin molded article with a three-dimensional feeling being recognizable in visual observation of the external appearance after the decorative sheet is molded into the decorative resin molded article; a decorative resin molded article obtained using the decorative sheet; and a method for producing the same.

### BRIEF DESCRIPTION OF THE DRAWINGS

Fig. 1 is a schematic sectional view of one example of a decorative sheet according to the present invention.
Fig. 2 is a schematic sectional view of one example of the decorative sheet according to the present invention.
Fig. 3 is a schematic sectional view of one example of the decorative sheet according to the present invention.

### EMBODIMENTS OF THE INVENTION

### 1. Decorative Sheet

A decorative sheet according to the present invention includes at least a base material layer, a first protective layer, and a second protective layer provided on a part of the first protective layer in this order, wherein the first protective layer is formed of an ionizing radiation curable resin composition containing a polyfunctional polycarbonate (meth)acrylate. In this specification, the term "(meth)acrylate" means "acrylate or methacrylate", and the same applies to other similar terms. In the decorative sheet of the present invention, the first protective layer is formed of an ionizing radiation curable resin composition containing a polyfunctional polycarbonate (meth)acrylate, and the second protective layer is provided on a part of the first protective layer. Thus, the protective sheet is capable of imparting a high design property to a decorative resin molded article with a three-dimensional feeling being recognizable in visual observation of the external appearance after the protective sheet is molded into the decorative resin molded article. More specifically, in the decorative sheet of the present invention, the first protective layer is formed of a specific ionizing radiation curable resin composition as described above, and thus an irregularity shape formed by the second protective layer provided on a part of the first protective layer is retained even under heat and pressure during injection molding as described later, or during preceding premolding (vacuum molding), so that deterioration of a high three-dimensional feeling presented in the decorative sheet is effectively suppressed. Hereinafter, the decorative sheet of the present invention will be described in detail.

### Laminated Structure of Decorative Sheet

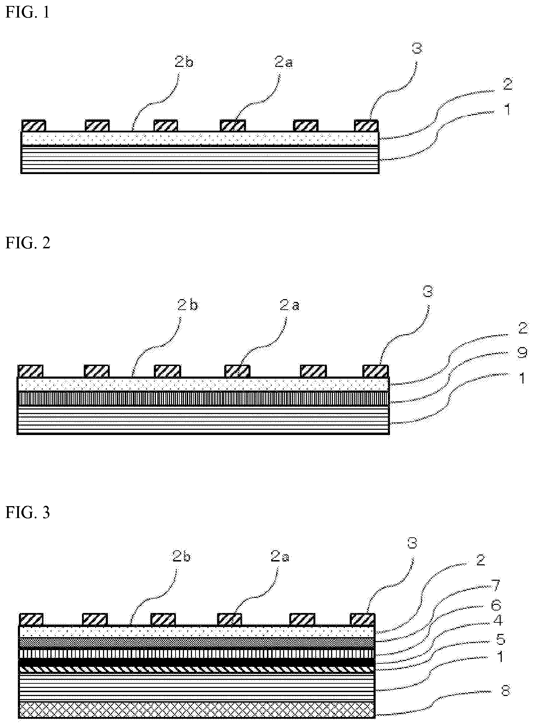

The decorative sheet of the present invention has a laminated structure in which at least a base material layer 1, a first protective layer 2 and a second protective layer 3 are laminated in this order. As shown in, for example, Fig. 1, the second protective layer 3 is provided on a portion 2a of the surface of the first protective layer 2. On the surface of the first protective layer 2, an irregularity shape is formed by the portion 2a which is provided with the second protective layer 3 and a portion 2b which is not provided with the second protective layer 3.

In the decorative sheet of the present invention, a pattern layer 4 may be provided as necessary for the purpose of, for example, imparting decorativeness to a resin molded article. For the purpose of suppressing a change or variation in color of the base material layer 1, a masking layer 5 may be provided as necessary between the base material layer 1 and the first protective layer 2, or between the base material layer 1 and the pattern layer 4 if the pattern layer 4 is provided. For the purpose of, for example, improving adhesion between the first protective layer 2 and a an adjacent layer, a primer layer 7 may be provided as necessary between the base material layer 1 and the first protective layer 2, or between the pattern layer 4 and the first protective layer 2 if the pattern layer 4 is provided. Further, for the purpose of, for example, improving the moldability of the decorative sheet, a transparent film layer 6 etc. may be provided as necessary between the base material layer 1 and the first protective layer 2, or between the pattern layer 4 and the first protective layer 2 if the pattern layer 4 is provided. Further, an adhesive layer 8 etc. may be provided under the base material layer 1. For the purpose of, for example, improving the abrasion resistance of the decorative sheet, a third protective layer 9 may be provided as necessary under the first protective layer 2, or between the first protective layer 2 and the pattern layer 4 if the pattern layer 4 is provided.

Examples of the laminated structure of the decorative sheet of the present invention include a laminated structure in which a base material layer, a first protective layer and a second protective layer are laminated in this order; a laminated structure in which a base material layer, a third protective layer, a first protective layer and a second protective layer are laminated in this order; a laminated structure in which a base material layer, a pattern layer, a first protective layer and a second protective layer are laminated in this order; a laminated structure in which a base material layer, a pattern layer, a primer layer, a first protective layer and a second protective layer are laminated in this order; a laminated structure in which a base material layer, a masking layer, a pattern layer, a first protective layer and a second protective layer are laminated in this order; a laminated structure in which a base material layer, a masking layer, a pattern layer, a third protective layer, a first protective layer and a second protective layer are laminated in this order; a laminated structure in which a base material layer, a masking layer, a pattern layer, a transparent film layer, a first protective layer and a second protective layer are laminated in this order; a laminated structure in which an adhesive layer, a base material layer, a masking layer, a pattern layer, a first protective layer and a second protective layer are laminated in this order; and a laminated structure in which an adhesive layer, a base material layer, a masking layer, a pattern layer, a transparent film layer, a primer layer, a first protective layer and a second protective layer are laminated in this order. As one aspect of the laminated structure of the decorative sheet of the present invention, Fig. 1 shows a schematic sectional view of one example of a decorative sheet in which a base material layer, a first protective layer and a second protective layer are laminated in this order. As one aspect of the laminated structure of the decorative sheet of the present invention, Fig. 2 shows a schematic sectional view of one example of a decorative sheet in which a base material layer, a third protective layer, a first protective layer and a second protective layer are laminated in this order. As one aspect of the laminated structure of the decorative sheet of the present invention, Fig. 3 shows a schematic sectional view of one example of a decorative sheet in which an adhesive layer, a base material layer, a masking layer, a pattern layer, a transparent film layer, a primer layer, a first protective layer and a second protective layer are laminated in this order.

### Compositions of Layers Forming Decorative Sheet

### [Base Material Layer 1]

The base material layer 1 is formed of a resin sheet (resin film) that serves as a support in the decorative sheet of the present invention. The resin component to be used in the base material layer 1 is not particularly limited, and may be appropriately selected according to three-dimensional moldability and compatibility with an injection resin layer, but a thermoplastic resin is preferable. Specific examples of the thermoplastic resin include acrylonitrile-butadiene-styrene resins (hereinafter, referred to as "ABS resins" in some cases); acrylonitrile-styrene-acrylic acid ester resins; acrylic resins; polyolefin-based resins such as polypropylene and polyethylene; polycarbonate resins; vinyl chloride-based resins; and polyethylene terephthalate (PET). Among them, ABS resins are preferable from the viewpoint of three-dimensional moldability. The resin components that form the base material layer 1 may be used alone, or may be used in combination of two or more thereof. The base material layer 1 may be formed of a single-layer sheet of the above-mentioned resin, or may be formed of a multi-layer sheet of the same resin or different resins.

One or both of the surfaces of the base material layer 1 may be subjected to a physical or chemical surface treatment such as an oxidation method or a roughening method as necessary for improving adhesion with an adjacent layer. Examples of the oxidation method that is carried out as a surface treatment of the base material layer 1 include corona discharge treatment, plasma treatment, chromium oxidation treatment, flame treatment, hot air treatment and ozone and ultraviolet ray treatment methods. Examples of the roughening method that is carried out as a surface treatment of the base material layer 1 include sand blasting methods and solvent treatment methods. The surface treatment is appropriately selected according to a type of resin component that forms the base material layer 1, but a corona discharge treatment method is preferable from the viewpoint of an effect, handling characteristics and so on.

The base material layer 1 may be colored by blending a colorant etc., coated for arranging the color, or provided with a pattern for imparting a design property.

The thickness of the base material layer 1 is not particularly limited, and is appropriately set according to a use purpose of the decorative sheet, etc., but it is normally about 50 to 800 µm, preferably about 100 to 600 µm, further preferably about 200 to 500 µm. When the thickness of the base material layer 1 falls within the above-mentioned range, further excellent three-dimensional moldability, design property and so on can be imparted to the decorative sheet.

### [First protective layer 2]

The first protective layer 2 is a layer that is provided for improving the scratch resistance, weather resistance and the like of the decorative sheet, and imparting a high three-dimensional feeling to the decorative sheet in cooperation with the later-described second protective layer 3. The first protective layer 2 is formed of an ionizing radiation curable resin composition containing a polyfunctional polycarbonate (meth)acrylate. Specifically, the first protective layer 2 is formed of a cured product of the ionizing radiation curable resin composition. In the decorative sheet of the present invention, the first protective layer 2 is formed of an ionizing radiation curable resin composition containing a specific ionizing radiation curable resin that is a polyfunctional polycarbonate (meth)acrylate, and thus presenting a high three-dimensional feeling in the decorative sheet in cooperation with the later-described second protective layer 3, and further, an irregularity shape formed by the later-described second protective layer 3 provided on a part of the first protective layer 2 is retained even under heat and pressure during injection molding as described later, or during preceding premolding (vacuum molding), so that deterioration of a high three-dimensional feeling presented in the decorative sheet is effectively suppressed. The detailed reason for this is not necessarily clear, but it is thought that the cured product of the ionizing radiation curable resin composition containing a polyfunctional polycarbonate (meth)acrylate has high elasticity, and therefore when heat and pressure are applied to the second protective layer 3 during injection molding etc., the first protective layer 2 formed of the cured product having high elasticity absorbs the pressure, and resultantly, the projection shape of the second protective layer 3 is effectively retained, so that deterioration of the high three-dimensional feeling is effectively suppressed.

### (Ionizing Radiation Curable Resin)

The polyfunctional polycarbonate (meth)acrylate contained in the ionizing radiation curable resin composition to be used for formation of the first protective layer 2 is an ionizing radiation curable resin. The ionizing radiation curable resin is a resin that is crosslinked and cured when irradiated with an ionizing radiation. Here, the ionizing radiation means an electromagnetic wave or charged particle ray having an energy quantum capable of polymerizing or crosslinking a molecule, and normally an ultraviolet (UV) ray or an electron beam (EB) is used, but the ionizing radiations also include electromagnetic waves such as an X-ray and a γ-ray, and charged particle rays such as an α-ray and an ion beam. Among ionizing radiation curable resins, electron beam curable resins are suitably used in formation of the first protective layer 2 because they can be made solventless, do not require an initiator for photopolymerization, and exhibit stable curing characteristics.

### <Polyfunctional polycarbonate (meth)acrylate>

The polyfunctional polycarbonate (meth)acrylate contained in the ionizing radiation curable resin composition in the first protective layer 2 according to the present invention is not particularly limited as long as it has a carbonate bond in the polymer main chain, and has two or more (meth)acrylate groups at the end or side chain, and the polycarbonate (meth)acrylate may be, for example, a urethane (meth)acrylate having a polycarbonate backbone. The (meth)acrylate has preferably 2 to 6 functional groups per molecule for improvement of crosslinking and curing. The polyfunctional polycarbonate (meth)acrylates may be used alone, or may be used in combination of two or more thereof. The urethane (meth)acrylate having a polycarbonate backbone is obtained by, for example, reacting a polycarbonate polyol, a polyvalent isocyanate compound and hydroxy (meth)acrylate.

The polyfunctional polycarbonate (meth)acrylate is obtained by, for example, converting some or all of hydroxyl groups of a polycarbonate polyol into a (meth)acrylate (acrylic acid ester or methacrylic acid ester). The esterification reaction can be carried out by a usual esterification reaction. Examples thereof include 1) a method in which a polycarbonate polyol and an acrylic acid halide or methacrylic acid halide are condensed in the presence of a base; 2) a method in which a polycarbonate polyol and an acrylic anhydride or methacrylic anhydride are condensed in the presence of a catalyst; and 3) a method in which a polycarbonate polyol and an acrylic acid or methacrylic acid are condensed in the presence of an acid catalyst.

The polycarbonate polyol is a polymer having a carbonate bond in the polymer main chain, and having 2 or more, preferably 2 to 50, further preferably 3 to 50 hydroxyl groups at the end or side chain. A typical method for producing the polycarbonate polyol is a method including a polycondensation reaction of a diol compound (A), a tri- or higher polyhydric alcohol (B), and a compound (C) as a carbonyl component.

The diol compound (A) which is used as a raw material of the polycarbonate polyol is represented by the general formula HO-R¹-OH. Here, R¹ is a divalent hydrocarbon group with a carbon number of 2 to 20, and may include an ether bond in the group. R¹ is, for example, a linear or branched alkylene group, a cyclohexylene group or a phenylene group.

Specific examples of the diol compound include ethylene glycol, 1,2-propylene glycol, diethylene glycol, dipropylene glycol, triethylene glycol, polyethylene glycol, neopentyl glycol, 1,3-propanediol, 1,4-butanediol, 1,5-pentanediol, 3-methyl-1,5-pentanediol, 1,6-hexanediol, 1,8-octanediol, 1,3-bis(2-hydroxyethoxy)benzene, 1,4-bis(2-hydroxyethoxy)benzene, neopentyl glycol, 1,4-cyclohexanediol and 1,4-cyclohexanedimethanol. These diols may be used alone, or may be used in combination of two or more thereof.

Examples of the tri- or higher polyhydric alcohol (B) which is used as a raw material of the polycarbonate polyol include alcohols such as trimethylolpropane, trimethylolethane, pentaerythritol, ditrimethylolpropane, dipentaerythritol, glycerin and sorbitol. The tri- or higher polyhydric alcohol may be an alcohol having a hydroxyl group with 1 to 5 equivalents of ethylene oxide, propylene oxide or other alkylene oxide added to the hydroxyl group of the polyhydric alcohol. These polyhydric alcohols may be used alone, or may be used in combination of two or more thereof.

The compound (C) as a carbonyl component which is used as a raw material of the polycarbonate polyol is any compound selected from a carbonic diester, phosgene and an equivalent thereof. Specific examples of the compound include carbonic acid diesters such as dimethyl carbonate, diethyl carbonate, diisopropyl carbonate, diphenyl carbonate, ethylene carbonate and propylene carbonate; phosgene; halogenated formic acid esters such as methyl chloroformate, ethyl chloroformate and phenyl chloroformate. These compounds may be used alone, or may be used in combination of two or more thereof.

The polycarbonate polyol is synthesized by subjecting the diol compound (A), the tri- or higher polyhydric alcohol (B), and the compound (C) as a carbonyl component to a polycondensation reaction under general conditions. The charged molar ratio of the diol compound (A) and the polyhydric alcohol (B) may be set to, for example, 50 : 50 to 99 : 1. The charged molar ratio of the compound (C) as a carbonyl component to the diol compound (A) and the polyhydric alcohol (B) may be set to, for example, 0.2 to 2 equivalents to hydroxyl groups of the diol compound and the polyhydric alcohol.

The equivalent number (eq./mol) of hydroxyl groups existing in the polycarbonate polyol after the polycondensation reaction with the above-mentioned charged ratio is, for example, 3 or more, preferably 3 to 50, further preferably 3 to 20 on average in one molecule. When such an equivalent number is satisfied, a necessary amount of (meth)acrylate groups are formed through an esterification reaction as described later, and moderate flexibility is imparted to the polyfunctional polycarbonate (meth)acrylate resin. The terminal functional groups of the polycarbonate polyol are usually OH groups, but some of them may be carbonate groups.

The method for producing a polycarbonate polyol as described above is described in, for example, Japanese Patent Laid-open Publication No. S64-1726. The polycarbonate polyol can also be produced through transesterification of a polycarbonate diol and a tri- or higher polyhydric alcohol as described in Japanese Patent Laid-open Publication No. H03-181517.

The molecular weight of the polyfunctional polycarbonate (meth)acrylate is not particularly limited, but it is, for example, 5,000 or more, preferably 10,000 or more in terms of a weight average molecular weight. The upper limit of the weight average molecular weight of the polyfunctional polycarbonate (meth)acrylate is not particularly limited, but it is, for example, 100,000 or less, preferably 50,000 or less for performing control so that the viscosity does not become excessively high. The weight average molecular weight of the polyfunctional polycarbonate (meth)acrylate is preferably 10,000 to 50,000, further preferably 10,000 to 20,000 for further improving the effect of presenting a textural generous low-glossy feeling, and moldability.

The weight average molecular weight of the polyfunctional polycarbonate (meth)acrylate in this specification is a value measured by a gel permeation chromatography method using polystyrene as a standard substance.

The content of the polyfunctional polycarbonate (meth)acrylate in the ionizing radiation curable resin composition which is used for formation of the first protective layer 2 is not particularly limited as long as the effect of the present invention is exhibited, but it is preferably 50% by mass or more, more preferably 80% by mass or more, further preferably 85% by mass or more for ensuring that an irregularity shape formed by the first protective layer 2 and the later-described second protective layer 3 is retained even under heat and pressure during injection molding etc., so that deterioration of a high three-dimensional feeling presented in the decorative sheet is effectively suppressed.

The ionizing radiation curable resin composition to be used for formation of the first protective layer 2 may further contain a polyfunctional urethane (meth)acrylate as an ionizing radiation curable resin in addition to the polyfunctional polycarbonate (meth)acrylate. The polyfunctional urethane (meth)acrylate is not particularly limited as long as it has a urethane bond in the polymer main chain, and has two or more (meth)acrylate groups at the end or side chain. Such a polyfunctional urethane (meth)acrylate can be obtained by, for example, esterifying a polyurethane oligomer with (meth)acrylic acid, the polyurethane oligomer being obtained by reaction of a polyether polyol or a polyester polyol with a polyisocyanate. The polyfunctional urethane (meth)acrylate has preferably 2 to 12 functional groups per molecule for improvement of crosslinking and curing. The polyfunctional urethane (meth)acrylates may be used alone, or may be used in combination of two or more thereof.

The molecular weight of the polyfunctional urethane (meth)acrylate is not particularly limited, but it is, for example, 2,000 or more, preferably 5,000 or more in terms of a weight average molecular weight. The upper limit of the weight average molecular weight of the polyfunctional urethane (meth)acrylate is not particularly limited, but it is, for example, 30,000 or less, preferably 10,000 or less for performing control so that the viscosity does not become excessively high.

The weight average molecular weight of the polyfunctional urethane (meth)acrylate in this specification is a value measured by a gel permeation chromatography method using polystyrene as a standard substance.

The content of the polyfunctional urethane (meth)acrylate in the ionizing radiation curable resin composition which is used for formation of the first protective layer 2 is not particularly limited as long as the effect of the present invention is exhibited, but it is preferably 50% by mass or less, more preferably 20% by mass or less, further preferably 15% by mass or less for ensuring that an irregularity shape formed by the first protective layer 2 and the later-described second protective layer 3 is retained even under heat and pressure during injection molding etc., so that deterioration of a high three-dimensional feeling presented in the decorative sheet is effectively suppressed.

When the polyfunctional polycarbonate (meth)acrylate and the polyfunctional urethane (meth)acrylate are used in combination in the ionizing radiation curable resin composition to be used for formation of the first protective layer 2, the mass ratio thereof (polyfunctional polycarbonate (meth)acrylate : polyfunctional urethane (meth)acrylate) is preferably about 50 : 50 to 99 : 1, more preferably about 80 : 20 to 99 : 1, further preferably about 85 : 15 to 99 : 1.

The ionizing radiation curable resin composition for forming the first protective layer 2 may further contain the following other ionizing radiation curable resin in addition to the polyfunctional polycarbonate (meth)acrylate and polyfunctional urethane (meth)acrylate. The other ionizing radiation curable resin is a resin that is crosslinked and cured when irradiated with the ionizing radiation described above, and specific examples thereof include those in which at least one of prepolymers, oligomers and monomers each having a polymerizable unsaturated bond or an epoxy group in the molecule is appropriately mixed.

As the monomer to be used as the other ionizing radiation curable resin, (meth)acrylate monomers having a radical-polymerizable unsaturated group in the molecule are suitable, and among them, polyfunctional (meth)acrylate monomers are preferable. The polyfunctional (meth)acrylate monomer may be a (meth)acrylate monomer having two or more polymerizable unsaturated bonds in the molecule (di- or more functional), preferably three or more polymerizable unsaturated bonds in the molecule (tri- or more functional). Specific examples of the polyfunctional (meth)acrylate include ethylene glycol di(meth)acrylate, propylene glycol di(meth)acrylate, 1,4-butanediol di(meth)acrylate, 1,6-hexanediol di(meth)acrylate, neopentyl glycol di(meth)acrylate, polyethylene glycol di(meth)acrylate, hydroxypivalic acid neopentyl glycol di(meth)acrylate, dicyclopentanyl di(meth)acrylate, caprolactone-modified dicyclopentenyl di(meth)acrylate, ethylene oxide-modified phosphoric acid di(meth)acrylate, allylated cyclohexyl di(meth)acrylate, isocyanurate di(meth)acrylate, trimethylolpropane tri(meth)acrylate, ethylene oxide-modified trimethylolpropane tri(meth)acrylate, dipentaerythritol tri(meth)acrylate, propionic acid-modified dipentaerythritol tri(meth)acrylate, pentaerythritol tri(meth)acrylate, propylene oxide-modified trimethylolpropane tri(meth)acrylate, tris(acryloxyethyl)isocyanurate, propionic acid-modified dipentaerythritol penta(meth)acrylate, dipentaerythritol hexa(meth)acrylate, ethylene oxide-modified dipentaerythritol hexa(meth)acrylate and caprolactone-modified dipentaerythritol hexa(meth)acrylate. These monomers may be used alone, or may be used in combination of two or more thereof.

As the oligomer to be used as the other ionizing radiation curable resin, (meth)acrylate oligomers having a radical-polymerizable unsaturated group in the molecule are suitable, and among them, polyfunctional (meth)acrylate oligomers having two or more polymerizable unsaturated bonds in the molecule (di- or more functional) are preferable. Examples of the polyfunctional (meth)acrylate oligomer include acrylic silicone (meth)acrylate, epoxy (meth)acrylate, polyester (meth)acrylate, polyether (meth)acrylate, polybutadiene (meth)acrylate, silicone (meth)acrylate, and oligomers having a cation-polymerizable functional group in the molecule (e.g., novolac-type epoxy resins, bisphenol-type epoxy resins, aliphatic vinyl ethers, aromatic vinyl ethers and so on). Here, the acrylic silicone (meth)acrylate can be obtained by radical-copolymerizing a silicone macro-monomer with a (meth)acrylate monomer. The epoxy (meth)acrylate can be obtained by, for example, reacting (meth)acrylic acid with an oxirane ring of a relatively low-molecular-weight bisphenol-type epoxy resin or novolac-type epoxy resin to perform esterification. Carboxyl-modified epoxy (meth)acrylate obtained by partially modifying the epoxy (meth)acrylate with a dibasic carboxylic anhydride can also be used. For example, the polyester (meth)acrylate can be obtained by esterifying hydroxyl groups of a polyester oligomer with (meth)acrylic acid, the polyester oligomer being obtained by condensation of a polyvalent carboxylic acid and a polyhydric alcohol and having a hydroxyl group at each of both ends, or by esterifying a hydroxyl group at the end of an oligomer with (meth)acrylic acid, the oligomer being obtained by adding an alkylene oxide to a polyvalent carboxylic acid. The polyether (meth)acrylate can be obtained by esterifying a hydroxyl group of a polyether polyol with (meth)acrylic acid. The polybutadiene (meth)acrylate can be obtained by adding (meth)acrylic acid to the side chain of a polybutadiene oligomer. The silicone (meth)acrylate can be obtained by adding (meth)acrylic acid to the end or side chain of a silicone having a polysiloxane bond in the main chain. These oligomers may be used alone, or may be used in combination of two or more thereof.

These other ionizing radiation curable resins may be used alone, or may be used in combination of two or more thereof. Among these other ionizing radiation curable resins, acrylic silicone (meth)acrylate etc. are preferable for further improving the three-dimensional moldability, scratch resistance and so on of the decorative sheet.

The first protective layer 2 may contain at least either of inorganic particles and resin particles. In the first protective layer 2, inorganic particles and resin particles have principally a function of reducing the gloss of the first protective layer 2, and generally, inorganic particles have a higher function of reducing the gloss than resin particles. When the first protective layer 2 contains inorganic particles or resin particles, the particles are dispersed in the first protective layer 2.

The inorganic particles are not particularly limited as long as they are particles formed of an inorganic compound, and examples thereof include silica particles, calcium carbonate particles, barium sulfate particles, alumina particles and glass balloon particles, and among them, silica particles are preferable. One kind of inorganic particles may be used, or two or more kinds of inorganic particles may be used in combination. The particle size of the inorganic particle is, for example, about 0.5 to 20 µm, preferably about 1 to 10 µm. In the present invention, the particle size of the inorganic particle is a value measured by an injection-type dry measurement method in which a powder to be measured is injected from a nozzle by means of compressed air, and dispersed in the air to perform measurement using a laser diffraction-type particle size distribution measurement apparatus (SALD-2100 manufactured by Shimadzu Corporation).

When the first protective layer 2 contains inorganic particles, the content of inorganic particles is not particularly limited, but it is preferably about 1 to 60 parts by mass, more preferably about 10 to 40 parts by mass based on 100 parts by mass of the ionizing radiation curable resin. One kind of inorganic particles may be used, or two or more kinds of inorganic particles may be used in combination.

The resin particles are not particularly limited as long as they are particles formed of a resin, and examples thereof include urethane beads, nylon beads, acryl beads, silicone beads, styrene beads, melamine beads, urethane acryl beads, polyester beads and polyethylene beads. Among these resin particles, urethane beads are preferable for further improving the scratch resistance of the decorative sheet. One kind of resin particles may be used, or two or more kinds of resin particles may be used in combination. The particle size of the resin particle is, for example, about 0.5 to 30 µm, preferably about 1 to 20 µm. The particle size of the resin particle is a value measured by a method similar to the method for measuring the particle size of the inorganic particle.

When the first protective layer 2 contains resin particles, the content of resin particles is not particularly limited, but it is preferably about 1 to 200 parts by mass, more preferably about 10 to 150 parts by mass based on 100 parts by mass of the ionizing radiation curable resin contained in the ionizing radiation curable resin composition.

When the first protective layer 2 contains at least either of inorganic particles and resin particles, some of these particles may protrude from the surface of the first protective layer 2, or particles may be embedded in the first protective layer 2.

In addition to the above-mentioned polyfunctional polycarbonate (meth)acrylate, polyfunctional urethane (meth)acrylate, inorganic particles and resin particles, various kinds of additives may be blended in the first protective layer 2 according to desired properties to be imparted to the first protective layer 2. Examples of the additives include weather resistance improving agents such as ultraviolet absorbers and light stabilizers, abrasion resistance improvers, polymerization inhibitors, crosslinkers, infrared absorbers, antistatic agents, bondability improvers, leveling agents, thixotropy imparting agents, coupling agents, plasticizers, antifoaming agents, fillers, solvents and colorants. The additives can be appropriately selected and used from those that are commonly used. As the ultraviolet absorber and light stabilizer, a reactive ultraviolet absorber and light stabilizer having a polymerizable group such as a (meth)acryloyl group in the molecule can also be used.

The thickness of the first protective layer 2 after curing is not particularly limited, but it is, for example, about 0.1 to 20 µm, preferably about 0.5 to 10 µm, further preferably about 1 to 5 µm. When the thickness of the first protective layer 2 after curing falls within the above-mentioned range, sufficient physical properties as a surface protective layer, such as scratch resistance, are obtained. The ionizing radiation curable resin composition for forming the first protective layer 2 can be uniformly irradiated with an ionizing radiation, and therefore it can be uniformly cured, thus being advantageous in terms of economy. On the other hand, for particularly improving the abrasion resistance of the decorative sheet, the thickness of the first protective layer 2 after curing is preferably 4 µm or more, more preferably about 5 to 10 µm. When the first protective layer 2 contains the at least either of inorganic particles and resin particles, the thickness of the first protective layer 2 is the thickness of a portion where inorganic particles or resin particles do not exist on the surface of the first protective layer 2.

Formation of the first protective layer 2 is performed by, for example, preparing the ionizing radiation curable resin composition containing the polyfunctional polycarbonate (meth)acrylate, applying the ionizing radiation-curable resin composition, and curing the ionizing radiation-curable resin composition through crosslinking. The viscosity of the ionizing radiation curable resin composition may be a viscosity that allows an uncured resin layer to be formed on a layer adjacent to the first protective layer 2 by an application method as described later. In the present invention, an uncured resin layer is formed by applying a prepared application liquid onto a layer adjacent to the first protective layer 2 by a known method such as gravure coating, bar coating, roll coating, reverse roll coating or comma coating, preferably gravure coating so that the above-mentioned thickness is obtained. The uncured resin layer formed in this manner is irradiated with an ionizing radiation such as an electron beam or an ultraviolet ray to cure the uncured resin layer, so that the first protective layer 2 is formed. When an electron beam is used as the ionizing radiation, an accelerating voltage thereof can be appropriately selected according to a resin to be used and a thickness of the layer, but the accelerating voltage is normally about 70 to 300 kV.

In irradiation of an electron beam, the transmission capacity increases as the accelerating voltage becomes higher, and therefore when a resin that is easily degraded by irradiation of an electron beam is used in a layer under the first protective layer 2, an accelerating voltage is selected so that the transmission depth of the electron beam is substantially equal to the thickness of the first protective layer 2. Accordingly, a layer situated under the first protective layer 2 can be inhibited from being excessively irradiated with an electron beam, so that degradation of the layers by an excessive electron beam can be minimized. The amount of radiation is preferably an amount with which the crosslinking density of the protective layer 2 is saturated, and the amount of radiation is selected within a range of normally 5 to 300 kGy (0.5 to 30 Mrad), preferably 10 to 50 kGy (1 to 5 Mrad). Further, the electron beam source is not particularly limited, and various kinds of electron beam accelerators can be used such as, for example, those of Cockcroft-Walton type, van de graaff type, tuned transformer type, insulated core transformer type, linear type, dynamitron type and high frequency type. When an ultraviolet ray is used as the ionizing radiation, it is practical to radiate light including an ultraviolet ray having a wavelength of 190 to 380 nm. The ultraviolet ray source is not particularly limited, and examples thereof include highpressure mercury lamps, low-pressure mercury lamps, metal halide lamps and carbon arc lamps.

### [Second protective layer 3]

In the decorative sheet of the present invention, the second protective layer 3 is provided on a part of the first protective layer 2, and the irregularity shape thus formed imparts a high three-dimensional feeling to the decorative sheet. Further, a high three-dimensional feeling can be imparted to the decorative sheet by providing a gloss difference between the second protective layer 3 and the first protective layer 2. For example, by bringing the second protective layer 3 into a high-glossy state (gloss) while bringing the first protective layer 2 into a low-glossy state (mat), and providing a gloss difference between both the layers, namely between a portion where the second protective layer 3 is formed and a portion where the second protective layer 3 is not formed, a high three-dimensional feeling can be imparted to the decorative sheet.

By matching an recess shape formed by the portion 2a which is provided with the second protective layer 3 and the portion 2b which is not provided with the second protective layer 3 on the surface of the first protective layer 2, and a pattern formed by the later-described pattern layer 4, a high three-dimensional feeling and a realistic design feeling can be imparted to the decorative sheet. For example, when the pattern formed on the later-described pattern layer 4 is a woodgrain pattern, a sense of reality can be imparted to the woodgrain pattern by matching a conduit portion presented by the pattern and the recess portion of the irregularity shape. Further, in the present invention, the first protective layer 2 is formed of the polyfunctional polycarbonate (meth)acrylate, so that the high three-dimensional feeling and the realistic design feeling presented in the decorative sheet by the first protective layer 2 and the second protective layer 3 are effectively inhibited from being deteriorated during molding.

The second protective layer 3 is formed of a resin composition. Specifically, the second protective layer 3 is formed of a cured product of the resin composition. The resin contained in the resin composition for forming the second protective layer 3 is not particularly limited, and examples thereof include ionizing radiation curable resins, thermosetting resins and thermoplastic resins. From the viewpoint of three-dimensional moldability and scratch resistance of the decorative sheet, it is preferable that the second protective layer 3 is formed of an ionizing radiation curable resin composition containing a polyfunctional polycarbonate (meth)acrylate like the first protective layer 2, but the resin for forming the second protective layer 3 may be appropriately selected according to a use of the decorative sheet. In the second protective layer 3, the polyfunctional urethane (meth)acrylate and other ionizing radiation curable resin may be used as in the case of the first protective layer 2.

The thermosetting resin in the second protective layer 3 is not particularly limited, and examples thereof include epoxy resins, phenol resins, urea resins, unsaturated polyester resins, melamine resins, alkyd resins, polyimide resins, silicone resins, hydroxyl group-functional acrylic resins, carboxyl-functional acrylic resins, amide-functional copolymers and urethane resins. The thermosetting resins may be used alone, or may be used in combination of two or more thereof.

The mode for curing of these thermosetting resins is not particularly limited, and mention may be made of, for example, the following modes. For example, in the case of an epoxy resin, mention is made of, for example, a reaction with amine, an acid catalyst, a carboxylic acid, an acid anhydride, a hydroxyl group, a dicyandiamide or a ketimine. In the case of a phenol resin, mention is made of, for example, a reaction of a base catalyst with excessive aldehyde. In the case of a urea resin, mention is made of, for example, a polycondensation reaction under an alkaline or acidic condition. In the case of an unsaturated polyester resin, mention is made of, for example, a co-condensation reaction of maleic anhydride with a diol. In the case of a melamine resin, mention is made of, for example, a heating polycondensation reaction of methylol melamine. In the case of an alkyd resin, mention is made of, for example, a reaction of unsaturated groups introduced into a side chain etc., which is caused by air oxidation. In the case of a polyimide resin, mention is made of, for example, a reaction in the presence of an acid or weak alkali catalyst, or a reaction with an isocyanate compound (two-liquid type). In the case of a silicone resin, mention is made of, for example, a condensation reaction of a silanol group in the presence of an acid catalyst. In the case of a hydroxyl group-functional acrylic resin, mention is made of, for example, a reaction of a hydroxyl group with an amino resin of the acrylic resin (one-liquid type). In the case of a carboxyl-functional acrylic resin, mention is made of, for example, a reaction of a carboxylic acid such as acrylic acid or methacrylic acid with an epoxy compound. In the case of an amide-functional copolymer, mention is made of, for example, a reaction with a hydroxyl group, or a self-condensation reaction. In the case of a urethane resin, mention is made of, for example, a reaction of a resin such as a hydroxyl group-containing polyester resin, polyether resin or acrylic resin with an isocyanate compound or a modified product thereof.

Specific examples of the thermoplastic resin in the second protective layer 3 include acrylic resins such as polymethyl (meth)acrylates and polyethyl (meth)acrylates; polyolefin-based resins such as polypropylene and polyethylene; polycarbonate resins; vinyl chloride-based resins; and polyethylene terephthalate (PET); acrylonitrile-butadiene-styrene resins (ABS resins); and acrylonitrile-styrene-acrylic acid ester resins. The thermoplastic resins may be used alone, or may be used in combination of two or more thereof. In the case where a thermoplastic resin is used for formation of the second protective layer 3, a resin composition containing a thermoplastic resin softened by heating can be formed in a layered shape, and then cooled to provide a cured product for forming the second protective layer 3.

The second protective layer 3 may contain at least either of inorganic particles and resin particles. As inorganic particles and resin particles, mention may be made of, for example, those identical, respectively, to the inorganic particles and the resin particles shown for the first protective layer 2. In the second protective layer 3, inorganic particles and resin particles exhibit principally a function of reducing the gloss of the second protective layer 3. As described above, a high three-dimensional feeling can be imparted to the decorative sheet by providing a gloss difference between the first protective layer 2 and the second protective layer 3. When the second protective layer 3 contains inorganic particles and resin particles, the particles are dispersed in the second protective layer 3.

The particle size of inorganic particles contained in the second protective layer 3 is not particularly limited, but it is preferably about 0.5 to 15 µm, more preferably about 1 to 10 µm. The particle size of resin particles is not particularly limited, but it is preferably about 0.1 to 20 µm, more preferably about 0.5 to 15 µm.

When the second protective layer 3 contains inorganic particles, the content of inorganic particles contained in the second protective layer 3 is not particularly limited, and it is preferably about 1 to 50 parts by mass, more preferably about 5 to 30 parts by mass based on 100 parts by mass of the resin contained in the second protective layer 3. The content of resin particles is not particularly limited, and it is preferably about 1 to 200 parts by mass, more preferably about 10 to 150 parts by mass based on 100 parts by mass of the resin contained in the second protective layer 3.

When the second protective layer 3 contains at least either of inorganic particles and resin particles, some of these particles may protrude from the surface of the second protective layer 3, or particles may be embedded in the second protective layer 3.

The thickness of the second protective layer 3 is not particularly limited, but it is preferably about 0.1 to 20 µm, more preferably about 0.5 to 10 µm, further preferably about 1 to 5 µm for ensuring that a three-dimensional feeling is imparted to the decorative sheet, and after molding, an irregularity shape formed by the second protective layer 3 is retained, so that deterioration of a high three-dimensional feeling presented in the decorative sheet is effectively suppressed. When the second protective layer 3 contains at least either of inorganic particles and resin particles, the thickness of the second protective layer 3 is the thickness of a portion where inorganic particles or resin particles do not exist on the surface of the second protective layer 3.

The second protective layer 3 can be formed in the same manner as in the case of the first protective layer 2. Specifically, the second protective layer 3 can be formed in the following manner: a resin composition for forming the second protective layer 3 is prepared, the resin composition is applied onto a part of the first protective layer 2 so as to have the above-mentioned thickness by a known method such as gravure printing, offset printing, silk screen printing or inkjet printing, preferably gravure printing, and the resin composition is cured by heating or irradiation of an ionizing radiation as necessary. The second protective layer 3 can also be formed on the first protective layer 2 by a transfer method using a transfer sheet obtained by forming a resin layer in a pattern shape on a separately provided base material.

In the case where the second protective layer 3 is formed from an ionizing radiation curable resin composition, an ionizing radiation curable resin composition for forming the second protective layer 3 is partially formed while an ionizing radiation curable resin composition for forming the first protective layer 2 is uncured or semi-cured, and irradiation of an ionizing radiation is then carried out under conditions which ensure that the ionizing radiation curable resin compositions of both the first protective layer 2 and the second protective layer 3 can be cured through crosslinking, whereby both the layers can be formed by one ionizing radiation irradiation step. Alternatively, irradiation of an ionizing radiation may be carried out two times, i.e. during formation of the first protective layer 2 and during formation of the second protective layer 3.

### [Third protective layer 9]

The third protective layer 9 is a layer that is provided as necessary for improving the abrasion resistance of the decorative sheet of the present invention. The third protective layer 9 is provided as necessary under the first protective layer 2, or between the first protective layer 2 and the pattern layer 4 if the pattern layer 4 is provided.

The third protective layer 9 is formed of a resin composition. Specifically, the third protective layer 9 is formed of a cured product of the resin composition. The resin contained in the resin composition for forming the third protective layer 9 is not particularly limited, and examples thereof include ionizing radiation curable resins, thermosetting resins and thermoplastic resins. For further improving the abrasion resistance of the decorative sheet, it is preferable that the third protective layer 9 is formed of an ionizing radiation curable resin composition, particularly preferably an ionizing radiation curable resin composition containing a polyfunctional polycarbonate (meth)acrylate, but the resin for forming the third protective layer 9 may be appropriately selected according to a use of the decorative sheet. In the third protective layer 9, the polyfunctional urethane (meth)acrylate and other ionizing radiation curable resin may be used as in the case of the first protective layer 2. As an ionizing radiation curable resin in the third protective layer 9, mention may be made of, for example, one identical to the ionizing radiation curable resin shown for the first protective layer 2.

The thermosetting resin and thermoplastic resin in the third protective layer 9 are not particularly limited, and mention may be made of, for example, those identical to the thermosetting resin and thermoplastic resin shown for the second protective layer 3. The same applies to the mode for curing of the thermosetting resin and the thermoplastic resin.

Like the first protective layer 2, the third protective layer 9 may contain at least either of inorganic particles and resin particles for the purpose of, for example, imparting a high three-dimensional feeling to the decorative sheet by providing a gloss difference between the third protective layer 9 and the second protective layer 3. As inorganic particles and resin particles, mention may be made of, for example, those identical, respectively, to the inorganic particles and resin particles shown for the first protective layer 2.

When the third protective layer 9 contains at least either of inorganic particles and resin particles, the particle size and content of these particles may be respectively the same as the particle size and content shown for the first protective layer 2.

The thickness of the third protective layer 9 is not particularly limited, but the total thickness of the first protective layer 2 and the third protective layer 9 is preferably about 1 to 40 µm, more preferably about 3 to 30 µm, further preferably about 5 to 10 µm for improving in particular the scratch resistance, moldability and abrasion resistance of the decorative sheet. When the third protective layer 9 contains the at least either of inorganic particles and resin particles, the thickness of the third protective layer 9 is the thickness of a portion where inorganic particles or resin particles do not exist on the surface of the third protective layer 9.

The third protective layer 9 can be formed in the same manner as in the case of the first protective layer 2. Specifically, the third protective layer 9 can be formed in the following manner: a resin composition for forming the third protective layer 9 is prepared, the resin composition is applied onto a layer adjacent to the third protective layer 9 (e.g. base material layer, pattern layer or the like) so as to have the above-mentioned thickness by a known method such as gravure printing, offset printing, silk screen printing or inkjet printing, preferably gravure printing, and the resin composition is cured by heating or irradiation of an ionizing radiation as necessary. The resin composition for forming the third protective layer 9 may be identical to that for the first protective layer 2. When the resin composition for forming the third protective layer 9 is identical to that for the first protective layer 2, the third protective layer 9 and the first protective layer 2 can be formed at one time by the same printing method.

In the case where the third protective layer 9 is formed from an ionizing radiation curable resin composition, an ionizing radiation curable resin composition for forming the first protective layer 3 is formed on the third protective layer 9 while an ionizing radiation curable resin composition for forming the third protective layer 9 is uncured or semi-cured, and irradiation of an ionizing radiation is then carried out under conditions which ensure that the ionizing radiation curable resin compositions of both the third protective layer 9 and first protective layer 2 can be cured through crosslinking, whereby both the layers can be formed by one ionizing radiation irradiation step. Alternatively, irradiation of an ionizing radiation may be carried out two times, i.e. during formation of the third protective layer 9 and during formation of the first protective layer 2. Further, in the case where the second protective layer 3 is also formed from an ionizing radiation curable resin composition, an ionizing radiation curable resin composition for forming the first protective layer 3 is formed, an ionizing radiation curable resin composition for forming the second protective layer 3 is then partially formed on the first protective layer 3, and irradiation of an ionizing radiation is then carried out under conditions which ensure that the ionizing radiation curable resin compositions of the third protective layer 9, first protective layer 2 and second protective layer 3 can be cured through crosslinking, whereby the three layers can be formed by one ionizing radiation irradiation step.

### [Pattern layer 4]

The pattern layer 4 is a layer that imparts decorativeness to a resin molded article, and is formed by printing various patterns using ink and a printer. The pattern formed by the pattern layer 4 is not particularly limited, examples thereof include woodgrain patterns, rift patterns resembling a surface of rock, such as marble patterns (e.g., travertine marble patterns), textile patterns resembling texture or fabric patterns, tiling patterns and brick masonry patterns, and also patterns formed by combining these patterns, such as those of wooden mosaics and patchworks. These patterns are formed by multicolor printing with usual process colors of yellow, red, blue and black, and also formed by multicolor printing etc. with spot colors, which is performed using plates of individual colors that constitute patterns.

As pattern ink to be used in the pattern layer 4, one obtained by appropriately mixing a binder with a colorant such as a pigment or a dye, an extender, a solvent, a stabilizer, a plasticizer, a catalyst, a curing agent and so on is used. The binder is not particularly limited, and examples thereof include polyurethane resins, vinyl chloride-vinyl acetate-based copolymer resins, vinyl chloride-vinyl acetate-acrylic copolymer resins, chlorinated polypropylene-based resins, acrylic resins, polyester-based resins, polyamide-based resins, butyral-based resins, polystyrene-based resins, nitrocellulose-based resins and cellulose acetate-based resins. These resins may be used alone, or may be used in combination of two or more thereof.

The colorant is not particularly limited, and examples thereof include inorganic pigments such as carbon black, iron black, titanium white, antimony white, chrome yellow, titanium yellow, rouge, cadmium red, ultramarine and cobalt blue, organic pigments or dyes such as quinacridone red, isoindolinone yellow and phthalocyanine blue, metallic pigments composed of scale-like foil pieces of aluminum, brass or the like, and pearlescent (pearl) pigments composed of scale-like foil pieces of titanium dioxide-coated mica, basic lead carbonate or the like.

The thickness of the pattern layer 4 is not particularly limited, but it is, for example, about 1 to 30 µm, preferably about 1 to 20 µm.

### [Masking layer 5]

The masking layer 5 is provided for the purpose of suppressing a change or variation in color of the base material layer 1. The masking layer 5 is provided as necessary between the base material layer 1 and the first protective layer 2, or between the base material layer 1 and the pattern layer 4 if the pattern layer 4 is provided.

The masking layer 5 is provided for inhibiting the base material layer 1 from adversely affecting the color tone and pattern of the decorative sheet, and is therefore formed as a layer of opaque color in general.

The masking layer 5 is formed using an ink composition obtained by appropriately mixing a binder with a colorant such as a pigment or a dye, an extender, a solvent, a stabilizer, a plasticizer, a catalyst, a curing agent and so on. The ink composition for forming the masking layer 5 is appropriately selected from those to be used in the pattern layer 4.

The masking layer 5 is desirable to be formed as a so called solid printing layer with its thickness usually set to about 1 to 20 µm.

### [Transparent film layer 6]

The transparent film layer 6 serves as a support improving the scratch resistance and weather resistance of the decorative sheet of the present invention and also improving moldability. The transparent film layer 6 is provided on the base material layer 1, the pattern layer 4 or the like as necessary. The transparent film layer 6 is formed of a resin film. When the transparent film layer 6 is provided, moldability is improved, so that cracks are hardly generated in the first protective layer 2 and the second protective layer 3 in three-dimensional molding of the decorative sheet. The resin film forming the transparent film layer 6 is not particularly limited as long as it improves the moldability of the decorative sheet, and does not mask a design from the pattern layer 4 when provided on the pattern layer 4, and examples thereof include films of polyester resins such as polyethylene terephthalate (PET) and polyethylene naphthalate (PEN), and acrylic resins. The thickness of the transparent film layer 6 is not particularly limited, but it is normally about 15 to 200 µm, preferably about 30 to 150 µm. The method for forming the transparent film layer 6 is not particularly limited, and examples thereof include a method in which the resin film is laminated onto the surface of an adjacent layer such as the base material layer 1 or the pattern layer 4 by heat lamination, dry lamination or the like.

### [Primer layer 7]

The primer layer 7 is a layer that is included as necessary for the purpose of, for example, improving adhesion between the first protective layer 2 and a layer situated under the first protective layer 2. The primer layer 7 can be formed from a resin.

The resin for forming the primer layer 7 is not particularly limited, and examples thereof include urethane resins, acrylic resins, (meth)acrylic-urethane copolymer resins, polyester resins and butyral resins. Among these resins, urethane resins, acrylic resins and (meth)acrylic-urethane copolymer resins are preferable. These resins may be used alone, or may be used in combination of two or more thereof.

As the urethane resin, a polyurethane having a polyol (polyhydric alcohol) as a main agent and an isocyanate as a crosslinker (curing agent) can be used. The polyol may be a compound having two or more hydroxyl groups in the molecule, and specific examples thereof include polyester polyol, polyethylene glycol, polypropylene glycol, acrylic polyol and polyether polyol. Specific examples of the isocyanate include polyvalent isocyanates having two or more isocyanate groups in the molecule; aromatic isocyanates such as 4,4-diphenylmethane diisocyanate; and aliphatic (or alicyclic) isocyanates such as hexamethylene diisocyanate, isophorone diisocyanate, hydrogenated tolylene diisocyanate and hydrogenated diphenylmethane diisocyanate.

Among the urethane resins, combinations of acrylic polyol or polyester polyol as a polyol and hexamethylene diisocyanate or 4,4-diphenylmethane diisocyanate as a crosslinker are preferable, and combinations of acrylic polyol and hexamethylene diisocyanate are further preferable from the viewpoint of improvement of adhesion after crosslinking, etc.

The acrylic resin is not particularly limited, and examples thereof include homopolymers of a (meth)acrylic acid ester, copolymers of two or more different (meth)acrylic acid ester monomers, and copolymers of a (meth)acrylic acid ester and other monomers. More specific examples of the (meth)acrylic resin include (meth)acrylic acid esters such as polymethyl (meth)acrylate, polyethyl (meth)acrylate, polypropyl (meth)acrylate, polybutyl (meth)acrylate, methyl (meth)acrylate-butyl (meth)acrylate copolymers, ethyl (meth)acrylate-butyl (meth)acrylate copolymers, ethylene-methyl (meth)acrylate copolymers and styrene-methyl (meth)acrylate. These acrylic resins may be used alone, or may be used in combination of two or more thereof.

The (meth)acrylic-urethane copolymer resin is not particularly limited, and examples thereof include acrylic-urethane (polyester urethane) block copolymer-based resins. As the curing agent, the above-mentioned various kinds of isocyanates are used. The ratio of acryl and urethane in the acrylic-urethane (polyester urethane) block copolymer is not particularly limited, but it is, for example, 9/1 to 1/9, preferably 8/2 to 2/8 in terms of an acrylic/urethane ratio (mass ratio).

The thickness of the primer layer 7 is not particularly limited, but it is, for example, about 0.1 to 10 µm, preferably about 1 to 10 µm. When the primer layer 7 satisfies the above-mentioned thickness, breakage, rupture, whitening and the like of the first protective layer 2 can be effectively suppressed.

The primer layer 7 is formed by a normal coating method such as gravure coating, gravure reverse coating, gravure offset coating, spinner coating, roll coating, reverse roll coating, kiss coating, wheeler coating, dip coating, solid coating with a silk screen, wire bar coating, flow coating, comma coating, pour coating, blushing or spray coating, or a transfer coating method using a resin for forming the primer layer 7. Here, the transfer coating method is a method in which a coating film of a primer layer or adhesive layer is formed on a thin sheet (film base material), and thereafter the surface of the intended layer in the decorative sheet is coated with the coating film.

### [Adhesive Layer 8]

The adhesive layer 8 is a layer that is provided on the back surface of the base material layer 1 as necessary for the purpose of, for example, improving adhesion between the decorative sheet and an injection resin. The resin for forming the adhesive layer 8 is not particularly limited as long as it can improve adhesion between the decorative sheet and an injection resin, and examples thereof include thermoplastic resins and thermosetting resins. Examples of the thermoplastic resin include acrylic resins, acrylic-modified polyolefin resins, chlorinated polyolefin resins, vinyl chloride-vinyl acetate copolymers, thermoplastic urethane resins, thermoplastic polyester resins, polyamide resins and rubber-based resins. The thermoplastic resins may be used alone, or may be used in combination of two or more thereof. Examples of the thermosetting resin include urethane resins and epoxy resins. The thermosetting resins may be used alone, or may be used in combination of two or more thereof.

The adhesive layer 8 is not necessarily required, but it is preferable to provide the adhesive layer 8 when it is conceivable that the decorative sheet of the present invention is applied to a decoration method in which the decorative sheet is bonded onto a previously provided resin molded body, such as a vacuum press-bonding method as described later. When the decorative sheet is used in a vacuum press-bonding method, it is preferable to form the adhesive layer 8 using, among various resins described above, one that is commonly used as a resin which exhibits bondability under pressure or heating.

The adhesive layer 8 can be formed by applying the above-mentioned resin to the surface of the base material layer 1. The thickness of the adhesive layer 8 is not particularly limited, but it is preferably about 1 to 20 µm.

### 2. Decorative resin molded article

The decorative resin molded article of the present invention is formed by integrating a molded resin with the decorative sheet of the present invention. Specifically, the decorative resin molded article of the present invention includes a laminated body in which at least a molded resin layer, a base material layer, a first protective layer, and a second protective layer provided on a part of the first protective layer are laminated in this order, wherein the first protective layer is formed of an ionizing radiation curable resin composition containing a polyfunctional polycarbonate (meth)acrylate. In the decorative resin molded article of the present invention, the decorative sheet may be provided with at least one of the above-mentioned pattern layer 4, masking layer 5, transparent film layer 6, primer layer 7, adhesive layer 8, third protective layer 9 and so on as necessary.

For example, the decorative resin molded article of the present invention is prepared by various injection molding methods such as an insert molding method, an injection molding simultaneous decorating method, a blow molding method and a gas injection molding method using the decorative sheet of the present invention. In the present invention, the decorative sheet of the present invention is subjected to various kinds of injection molding methods to prepare a decorative resin molded article, and thus the effect of suppressing deterioration of a three-dimensional feeling during injection molding can be exhibited. Among these injection molding methods, an insert molding method and an injection molding simultaneous decorating method are preferable.

In the insert molding method, first the decorative sheet of the present invention is vacuum-molded into a molded article surface shape beforehand using a vacuum molding die (off-line preliminary molding) in a vacuum molding step, and then an unnecessary portion is trimmed off as necessary to obtain a molded sheet. The molded sheet is inserted into an injection molding die, the injection molding die is closed, a fluidized resin is injected into the die, and solidified to integrate the decorative sheet with the outer surface of the resin molded body in parallel to injection molding, thereby producing a decorative resin molded article.

More specifically, the decorative resin molded article of the present invention is produced by an insert molding method including:
a vacuum molding step of molding the decorative sheet of the present invention into a three-dimensional shape beforehand by a vacuum molding die;
a trimming step of trimming off an unnecessary portion of the vacuum-molded decorative sheet to obtain a molded sheet; and
an integration step of inserting the molded sheet into an injection molding die, closing the injection molding die, and injecting a fluidized resin into the injection molding die to integrate the resin with the molded sheet.

In the vacuum molding step in the insert molding method, the decorative sheet may be heated and molded. The heating temperature here is not particularly limited, and may be appropriately selected according to a type of the resin that forms the decorative sheet, or a thickness of the decorative sheet, but for example, when an ABS resin film is used as the base material layer, the heating temperature may be normally about 120 to 200°C. In the integration step, the temperature of the fluidized resin is not particularly limited, but it may be normally about 180 to 320°C.

In the injection molding simultaneous decorating method, the decorative sheet of the present invention is disposed in a female die also serving as a vacuum molding die provided with a suction hole for injection molding, and is subjected to preliminary molding in this female die (in-line preliminary molding), the injection molding die is then closed, a fluidized resin is injected and filled into the die, and solidified to integrate the decorative sheet of the present invention with the outer surface of the resin molded body in parallel to injection molding, thereby producing a decorative resin molded article.

More specifically, the decorative resin molded article of the present invention is produced by an injection molding simultaneous decorating method including:
a preliminary molding step of placing the decorative sheet of the present invention so that the surface of the base material layer of the decorative sheet faces a molding surface of a movable die, the molding surface having a predetermined molding shape, then heating and softening the decorative sheet, and vacuum-suctioning the decorative sheet from the movable die side to adhere the softened decorative sheet along the molding surface of the movable die, thereby preliminarily molding the decorative sheet;
an integration step of closing the movable die having the decorative sheet adhered along the molding surface, and a fixed die, then injecting and filling a fluidized resin into a cavity formed by both the dies, solidifying the resin to form a resin molded body, and laminating and integrating the resin molded body and the decorative sheet with each other; and
a taking-out step of separating the movable die from the fixed die to take out the resin molded body with all the layers of the decorative sheet laminated thereon.

In the preliminary molding step in the injection molding simultaneous decorating method, the heating temperature of the decorative sheet is not particularly limited, and may be appropriately selected according to a type of the resin that forms the decorative sheet, or a thickness of the decorative sheet, but when a polyester resin film or an acrylic resin film is used as the base material layer, the heating temperature may be normally about 70 to 130°C. In the injection molding step, the temperature of the fluidized resin is not particularly limited, but it may be normally about 180 to 320°C.

The decorative resin molded article of the present invention can also be prepared by a decoration method in which the decorative sheet of the present invention is bonded onto a previously provided three-dimensional resin molded body (molded resin layer), such as a vacuum press-bonding method. In the vacuum press-bonding method, first the decorative sheet of the present invention and a resin molded body are placed in a vacuum press-bonding machine including a first vacuum chamber situated on the upper side and a second vacuum chamber situated on the lower side so that the decorative sheet is on the first vacuum chamber side and the resin molded body is on the second vacuum chamber side, and that the base material layer 1 side of the decorative sheet faces the resin molded body side. The two vacuum chambers are then evacuated. The resin molded body is placed on a lift table that is provided on the second vacuum chamber side and is capable of moving up and down. Then, the first vacuum chamber is pressurized, and the molded body is abutted against the decorative sheet with the lift table. By using a pressure difference between the two vacuum chambers, the decorative sheet is bonded to the surface of the resin molded body while being stretched. Finally, the two vacuum chambers are released to atmospheric pressure, and an unnecessary portion of the decorative sheet is trimmed off as necessary, so that the decorative resin molded article of the present invention can be obtained.

Preferably, the vacuum press-bonding method includes the step of heating the decorative sheet for softening the decorative sheet to improve the moldability thereof before the step of abutting the molded body against the decorative sheet. The vacuum press-bonding method including such a step may be referred to particularly as a vacuum heating and press-bonding method. The heating temperature in such a step may be appropriately selected according to a type of the resin that forms the decorative sheet, or a thickness of the decorative sheet, but when a polyester resin film or an acrylic resin film is used as the base material layer, the heating temperature may be normally about 60 to 200°C.

In the decorative resin molded article of the present invention, a resin appropriate for a use may be selected to form the molded resin layer. The molding resin for forming the molded resin layer may be a thermoplastic resin or may be a thermosetting resin.

Examples of the thermoplastic resin include polyolefin-based resins such as polyethylene and polypropylene, ABS resins, styrene resins, polycarbonate resins, acrylic resins and vinyl chloride-based resins. These thermoplastic resins may be used alone, or may be used in combination of two or more thereof.

Examples of the thermosetting resin include urethane resins and epoxy resins. These thermosetting resins may be used alone, or may be used in combination of two or more thereof.

The decorative resin molded article of the present invention has high moldability and scratch resistance, and has a high three-dimensional feeling when molded into a decorative resin molded article. Therefore, the decorative resin molded article of the present invention can be used for, for example, interior materials or exterior materials of vehicles such as automobiles; fittings such as window frames and door frames; interior materials of buildings such as walls, floors and ceilings; housings of household electric appliances such as television receivers and air conditioners; and containers etc.

### EXAMPLES

Hereinafter, the present invention will be described in detail by way of examples and comparative examples. However, the present invention is not limited to examples.

### <Examples 1 to 6 (not forming the invention) and Comparative Examples 1 to 3>

### (Preparation of decorative sheet)

A pattern layer (thickness: 5 µm) was formed on an ABS resin film (thickness: 400 µm) as a base material layer by gravure printing using an ink containing a vinyl chloride-vinyl acetate-acrylic copolymer resin. The pattern of the pattern layer was a woodgrain pattern. Next, a first protective layer (thickness: 3 µm) was formed on the pattern layer by gravure printing using a resin composition having composition as described in Table 1. Next, using the resin composition having composition as described in Table 1, a second protective layer (thickness: 3 µm) matched with the woodgrain pattern was formed in a pattern shape so that a non-formed portion was situated at a position corresponding to a conduit portion of the woodgrain pattern on the pattern layer. Irradiation of electron beams (accelerating voltage: 165 kV, radiation dose: 50 kGy (5 Mrad)) was then carried out from the second protective layer side to cure the first protective layer and the second protective layer, thereby obtaining a decorative sheet which had a configuration as shown in Table 1 and in which a base material layer, a pattern layer, a first protective layer and a second protective layer were laminated in this order.

### <Examples 7 to 12 (forming the invention)>

### (Preparation of decorative sheet)

A pattern layer (thickness: 5 µm) was formed on an ABS resin film (thickness: 400 µmm) as a base material layer by gravure printing using an ink containing a vinyl chloride-vinyl acetate-acrylic copolymer resin. The pattern of the pattern layer was a woodgrain pattern. Next, a third protective layer (thickness: 3 µm) was formed on the pattern layer by gravure printing using a resin composition having composition as described in Table 2. Next, a first protective layer (thickness: 3 µm) was formed on the third protective layer by gravure printing using the resin composition having composition as described in Table 2. Next, using the resin composition having composition as described in Table 2, a second protective layer (thickness: 3 µm) matched with the woodgrain pattern was formed in a pattern shape so that a non-formed portion was situated at a position corresponding to a conduit portion of the woodgrain pattern on the pattern layer. Irradiation of electron beams (accelerating voltage: 165 kV, radiation dose: 50 kGy (5 Mrad)) was then carried out from the second protective layer side to cure the first protective layer, the second protective layer and the third protective layer, thereby obtaining a decorative sheet which had a configuration as shown in Table 2 and in which a base material layer, a pattern layer, a third protective layer, a first protective layer and a second protective layer were laminated in this order.

### (Evaluation of design property of decorative sheet)

The external appearance of the decorative sheet obtained in each of Examples 1 to 12 and Comparative Examples 1 to 3 was visually observed, and the design property (gloss-mat effect) of the decorative sheet presented by the irregularity of the second protective layer and the first protective layer was evaluated in accordance with the following criteria. The results are shown in Table 1 and Table 2.
⊙: The three-dimensional feeling of the design presented by the irregularity of the second protective layer and the first protective layer is recognizable, and a woody realistic design feeling can be presented.
O: The three-dimensional feeling of the design presented by the irregularity of the second protective layer and the first protective layer is recognizable.
△: The three-dimensional feeling of the design presented by the irregularity of the second protective layer and the first protective layer is slightly recognizable.
×: The three-dimensional feeling of the design presented by the irregularity of the second protective layer and the first protective layer is not recognizable.

### (Evaluation of design property after injection molding)

The decorative sheet of each of Examples 1 to 12 and Comparative Examples 1 to 3 was heated at a heating platen temperature of 170°C to be molded so as to follow the shape of the inside of a die for injection molding, so that the decorative sheet was in contact with the die inner surface on the second protective layer side. As the die, one having a shape with a high deep drawing degree, i.e. a tray shape with a size of 80 mm square, a rise of 10 mm and a corner radius of 2 R was used. On the other hand, an ABS resin [manufactured by NIPPON A&L INC., trade name "KRALASTIC MTH-2"] was provided as an injection resin, and this resin was brought into a molten state at 230°C, and injected into a cavity. At the time when the die temperature reached 30°C, a decorative resin molded article was taken out from the die to obtain a decorative resin molded article. The external appearance of the obtained decorative resin molded article was visually observed, and the design property (gloss-mat effect) presented by the irregularity of the second protective layer and the first protective layer was evaluated in accordance with the following criteria. The results are shown in Table 1 and Table 2.
⊙: The three-dimensional feeling of the design presented by the irregularity of the second protective layer and the first protective layer is recognizable, and a woody realistic design feeling can be presented.
O: The three-dimensional feeling of the design presented by the irregularity of the second protective layer and the first protective layer is recognizable.
△: The three-dimensional feeling of the design presented by the irregularity of the second protective layer and the first protective layer is slightly recognizable.
×: The three-dimensional feeling of the design presented by the irregularity of the second protective layer and the first protective layer is not recognizable.

### (Test for evaluation of moldability)

The decorative sheet of each of Examples 1 to 12 and Comparative Examples 1 to 3 was heated to 160°C with an infrared heater, and thereby softened. Next, the decorative sheet was vacuum-molded using a vacuum molding die under conditions ensuring a maximum draw ratio of 150%, so that the decorative sheet was molded so as to follow the internal shape of the vacuum molding die. Next, the decorative sheet was cooled, and then released from the vacuum molding die. For each released decorative sheet, moldability was evaluated in accordance with the following evaluation criteria. The results are shown in Table 1.
⊙: The surface of the released decorative sheet is not cracked or whitened at all, and the decorative sheet satisfactorily follows the internal shape of the vacuum molding die.
O: A part of a portion stretched at the highest draw ratio (150%) is slightly film-cracked or whitened, but there is no problem in practical use.
△: A part of a portion stretched at a draw ratio of 100 to 149% is slightly film-cracked or whitened, but there is no problem in practical use.
×: Even the surface of a portion stretched at a draw ratio of less than 100% is cracked or whitened, and the decorative sheet cannot follow the internal shape of the vacuum molding die.

### (Test for evaluation of scratch resistance)

The surface of the decorative sheet of each of Examples 1 to 12 and Comparative Examples 1 to 3 was scratched back and forth ten times with nails, and the state of the surface was visually observed, and evaluated in accordance with the following criteria. The results are shown in Table 1 and Table 2.
⊙: The surface does not have scratches and an increased gloss.
○: The surface has slight scratches and an increased gloss, but there is no problem in practical use.
△: The surface has slight scratches and an increased gloss, but is not chipped or whitened.
×: The surface has significant scratches and an increased gloss.

### (Taber abrasion test)

A decorative resin molded article was obtained in the same manner as described above (evaluation of design property after injection molding), except that the decorative sheet of each of Examples 1 to 12 and Comparative Examples 1 to 3 was heated at a heating platen temperature of 160°C to be molded so as to follow the shape of the inside of a die for injection molding. For the obtained decorative resin molded article, the abrasion resistance of the surface was evaluated by a method conforming to the specifications in JIS K7204. For test conditions, the load of two abrasion wheels (CS-10) was 500 g, and the rotation number was 60 rpm. The evaluation criteria of abrasion resistance are as follows. The results are shown in Table 1 and Table 2.
⊙: There is no change in design after the test.
○: The pattern layer is slightly delaminated after the test, but there is no problem in practical use.
△: The pattern layer is delaminated after the test, but the base material is not exposed.
×: The base material layer is exposed after the test, and thus abrasion resistance is low.

**[Table 1]**

| | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Resin composition of second protective layer | Resin (mass ratio) | EB1 | EB1 | EB1 | AU | EB2 | EB3 | EB1 | EB4 | EB4/PMMA (25/75) |
| | Resin particles | 3U | 3U | 3U | 3U | 3U | 3U | 3U | 3U | 3U |
| | Amount of resin particles based on 100 parts by mass of resin (parts by mass) | 10 | 10 | 10 | 10 | 10 | 10 | 10 | 10 | 10 |
| Resin composition of first protective layer | Resin (mass ratio) | EB1 | EB1 | EB1 | EB1 | EB2 | EB3 | AU | EB4 | EB4/PMMA (25/75) |
| | Inorganic particles | 1.3S | 1.3S | 1.3S | 1.3S | 1.3S | 1.3S | 1.3S | 2S | 2S |
| | Amount of inorganic particles based on 100 parts by mass of resin (parts by mass) | 30 | 10 | 50 | 30 | 30 | 30 | 40 | 30 | 30 |
| Design property of decorative sheet | | ⊙ | ○ | ⊙ | ⊙ | ⊙ | ⊙ | ⊙ | ⊙ | ⊙ |
| Design property of decorative resin molded article | | ⊙ | ○ | ⊙ | ○ | ⊙ | ⊙ | △ | × | × |
| Moldability of decorative sheet | | ⊙ | ⊙ | ○ | ⊙ | ⊙ | ○ | × | × | ⊙ |
| Scratch resistance of decorative sheet | | ○ | ⊙ | ⊙ | △ | ○ | △ | × | ○ | △ |
| Abrasion resistance of decorative sheet | | △ | △ | △ | △ | △ | △ | △ | △ | △ |

**[Table 2]**

| | | Example 7 | Example 8 | Example 9 | Example 10 | Example 11 | Example 12 |
|---|---|---|---|---|---|---|---|
| Resin composition of second protective layer | Resin (mass ratio) | EB1 | EB1 | EB1 | AU | EB2 | EB3 |
| | Resin particles | 3U | 3U | 3U | 3U | 3U | 3U |
| | Amount of resin particles based on 100 parts by mass of resin (parts by mass) | 10 | 10 | 10 | 10 | 10 | 10 |
| Resin composition of first protective layer | Resin (mass ratio) | EB1 | EB1 | EB1 | EB1 | EB2 | EB3 |
| | Inorganic particles | 1.3S | 1.3S | 1.3S | 1.3S | 1.3S | 1.3S |
| | Amount of inorganic particles based on 100 parts by mass of resin (parts by mass) | 30 | 10 | 30 | 30 | 30 | 30 |
| Resin composition of third protective layer | Resin (mass ratio) | EB1 | EB1 | EB1 | AU | EB2 | EB3 |
| | Inorganic particles | 1.3S | 1.3S | 1.3S | 1.3S | 1.3S | 1.3S |
| | Amount of inorganic particles based on 100 parts by mass of resin (parts by mass) | 30 | 10 | 10 | 10 | 30 | 30 |
| Design property of decorative sheet | | ⊙ | ○ | ⊙ | ⊙ | ⊙ | ⊙ |
| Design property of decorative resin molded article | | ⊙ | ○ | ○ | ○ | ⊙ | ⊙ |
| Moldability of decorative sheet | | ⊙ | ⊙ | ⊙ | ⊙ | Δ | Δ |
| Scratch resistance of decorative sheet | | ○ | ⊙ | ⊙ | ⊙ | ○ | Δ |
| Abrasion resistance of decorative sheet | | ⊙ | ⊙ | ⊙ | ○ | ⊙ | ⊙ |

As the components shown in Table 1 and Table 2, the following components were used.
(Resin)
   AU: Two-liquid curable resin of 100 parts of acrylic polyol/urethane (mass ratio: 8 : 2) and 7 parts of hexamethylene diisocyanate
   EB1: Mixed resin of difunctional polycarbonate acrylate (weight average molecular weight: 10,000)/tetrafunctional urethane acrylate (weight average molecular weight: 6,000) (mass ratio: 95/5)
   EB2: Mixed resin of difunctional polycarbonate acrylate (weight average molecular weight: 10,000)/tetrafunctional urethane acrylate (weight average molecular weight: 6,000) (mass ratio: 90/10)
   EB3: Mixed resin of difunctional polycarbonate acrylate (weight average molecular weight: 10,000)/tetrafunctional urethane acrylate (weight average molecular weight: 6,000) (mass ratio: 80/20)
   EB4: Tetrafunctional urethane acrylate (weight average molecular weight: 6,000) PMMA: Methyl methacrylate-methyl acrylate copolymer (mass ratio: 100 : 5)
(Inorganic particles)
   1.3S: Silica particles having a particle size of 1.3 µm
   2S: Silica particles having a particle size of 2 µm
(Resin particles)
   3U: Urethane beads having a particle size of 3 µm

As shown in Table 1 and Table 2, it was evident that the decorative sheets of Examples 1 to 12 in which the first protective layer is formed of an ionizing radiation curable resin composition containing a polyfunctional polycarbonate acrylate are satisfactory or have practically no problem in design property of the decorative sheet and decorative resin molded article and moldability and scratch resistance of the decorative sheet. On the other hand, the decorative sheet of Comparative Example 1 in which the second protective layer is formed of an ionizing radiation curable resin composition containing a polyfunctional polycarbonate acrylate, but a polyfunctional polycarbonate acrylate is not used in the first protective layer is satisfactory in design property of the decorative sheet, but is poor in design property as a decorative resin molded article, and poor in moldability and scratch resistance of the decorative sheet. The decorative sheet of Comparative Example 2 in which a polyfunctional urethane acrylate is used in each of the first protective layer and the second protective layer is satisfactory in design property of the decorative sheet, but is poor in design property as a decorative resin molded article, and poor in moldability of the decorative sheet. The decorative sheet of Comparative Example 3 in which a mixed resin of a polyfunctional urethane acrylate and PMMA is used in each of the first protective layer and the second protective layer is satisfactory in design property of the decorative sheet, but is poor in design property as a decorative resin molded article.

As shown in Table 2, the decorative sheets of Examples 7 to 12 (forming the invention) which include the first protective layer formed of an ionizing radiation curable resin composition containing a polyfunctional polycarbonate acrylate, the above-mentioned second protective layer, and a third protective layer formed under the first protective layer are excellent particularly in abrasion resistance in the Taber abrasion test.

### DESCRIPTION OF REFERENCE SIGNS

- 1: Base material layer
- 2: First protective layer
- 3: Second protective layer
- 4: Pattern layer
- 5: Masking layer
- 6: Transparent film layer
- 7: Primer layer
- 8: Adhesive layer
- 9: Third protective layer

## Claims

1. A decorative sheet comprising at least a base material layer, a first protective layer, and a second protective layer provided on a part of the first protective layer in this order, wherein
the first protective layer is formed of an ionizing radiation curable resin composition containing a polyfunctional polycarbonate (meth)acrylate, and wherein the sheet comprises a third protective layer provided under the first protective layer, wherein the third protective layer is formed of an ionizing radiation curable resin composition.

2. The decorative sheet according to claim 1, wherein a content of the polyfunctional polycarbonate (meth)acrylate in the ionizing radiation curable resin composition is 50% by mass or more.

3. The decorative sheet according to claim 1 or 2, wherein the ionizing radiation curable resin composition further contains a polyfunctional urethane (meth)acrylate.

4. The decorative sheet according to claim 3, wherein a mass ratio of the polyfunctional polycarbonate (meth)acrylate and the polyfunctional urethane (meth)acrylate is in a range of 50 : 50 to 99 : 1.

5. The decorative sheet according to any one of claims 1 to 4, wherein the polyfunctional polycarbonate (meth)acrylate has a weight average molecular weight of 10,000 or more, as measurement according to the method mentioned in the description.

6. The decorative sheet according to any one of claims 1 to 5, wherein the second protective layer is formed of an ionizing radiation curable resin composition containing a polyfunctional polycarbonate (meth)acrylate.

7. The decorative sheet according to any one of claims 1 to 6, wherein the first protective layer has a thickness of 0.1 to 20 µm.

8. The decorative sheet according to any one of claims 1 to 7, wherein the second protective layer has a thickness of 0.1 to 20 µm.

9. The decorative sheet according to any one of claims 1 to 8, wherein the first protective layer contains at least either of inorganic particles and resin particles.

10. The decorative sheet according to any one of claims 1 to 9, wherein the second protective layer contains at least either of inorganic particles and resin particles.

11. The decorative sheet according to any one of claims 1 to 10, further comprising a pattern layer between the base material layer and the first protective layer.

12. The decorative sheet according to claim 11, wherein a recess shape formed by a portion which is provided with the second protective layer and a portion which is not provided with the second protective layer is matched with a pattern of the pattern layer on the first protective layer.

13. A decorative resin molded article comprising a laminated body in which at least a molded resin layer, a base material layer, a first protective layer, and a second protective layer provided on a part of the first protective layer are laminated in this order, wherein
the first protective layer is formed of an ionizing radiation curable resin composition containing a polyfunctional polycarbonate (meth)acrylate, and wherein the decorative resin molded article comprises a third protective layer provided under the first protective layer, wherein the third protective layer is formed of an ionizing radiation curable resin composition.

14. A method for producing a decorative resin molded article, the method comprising:
an integration step of inserting the decorative sheet according to any one of claims 1 to 12 into an injection molding die, closing the injection molding die, and injecting a fluidized resin into the injection molding die to integrate the resin with the decorative sheet.

## Patentansprüche

1. Dekorfolie, umfassend mindestens eine Grundmaterialschicht, eine erste Schutzschicht und eine zweite Schutzschicht, die in dieser Reihenfolge auf einem Teil der ersten Schutzschicht angeordnet sind, wobei
die erste Schutzschicht aus einer durch ionisierende Strahlung härtbaren Harzzusammensetzung gebildet ist, die ein polyfunktionelles Polycarbonat(meth)acrylat enthält, und wobei die Folie eine dritte Schutzschicht umfasst, die unter der ersten Schutzschicht vorgesehen ist, wobei die dritte Schutzschicht aus einer durch ionisierende Strahlung härtbaren Harzzusammensetzung gebildet ist.

2. Dekorfolie nach Anspruch 1, wobei ein Gehalt des polyfunktionellen Polycarbonat(meth)acrylats in der durch ionisierende Strahlung härtbaren Harzzusammensetzung 50 Masse-% oder mehr beträgt.

3. Dekorfolie nach Anspruch 1 oder 2, wobei die durch ionisierende Strahlung härtbare Harzzusammensetzung ferner ein polyfunktionelles Urethan(meth)acrylat enthält.

4. Dekorfolie nach Anspruch 3, wobei ein Massenverhältnis des polyfunktionellen Polycarbonat(meth)acrylats und des polyfunktionellen Urethan(meth)acrylats in einem Bereich von 50:50 bis 99:1 liegt.

5. Dekorfolie nach einem der Ansprüche 1 bis 4, wobei das polyfunktionelle Polycarbonat(meth)acrylat ein gewichtsmittleres Molekulargewicht von 10.000 oder mehr aufweist, gemessen nach dem in der Beschreibung genannten Verfahren.

6. Dekorfolie nach einem der Ansprüche 1 bis 5, wobei die zweite Schutzschicht aus einer durch ionisierende Strahlung härtbaren Harzzusammensetzung gebildet ist, die ein polyfunktionelles Polycarbonat(meth)acrylat enthält.

7. Dekorfolie nach einem der Ansprüche 1 bis 6, wobei die erste Schutzschicht eine Dicke von 0,1 bis 20 µm aufweist.

8. Dekorfolie nach einem der Ansprüche 1 bis 7, wobei die zweite Schutzschicht eine Dicke von 0,1 bis 20 µm aufweist.

9. Dekorfolie nach einem der Ansprüche 1 bis 8, wobei die erste Schutzschicht mindestens entweder anorganische Partikel oder Harzpartikel enthält.

10. Dekorfolie nach einem der Ansprüche 1 bis 9, wobei die zweite Schutzschicht mindestens entweder anorganische Partikel oder Harzpartikel enthält.

11. Dekorfolie nach einem der Ansprüche 1 bis 10, ferner umfassend eine Musterschicht zwischen der Grundmaterialschicht und der ersten Schutzschicht.

12. Dekorfolie nach Anspruch 11, wobei eine Vertiefungsform, die durch einen Abschnitt, der mit der zweiten Schutzschicht versehen ist, und einen Abschnitt, der nicht mit der zweiten Schutzschicht versehen ist, gebildet ist, an ein Muster der Musterschicht auf der ersten Schutzschicht angepasst ist.

13. Dekorativer Harzformartikel, umfassend einen laminierten Körper, bei dem mindestens eine geformte Harzschicht, eine Grundmaterialschicht, eine erste Schutzschicht und eine zweite Schutzschicht, die auf einem Teil der ersten Schutzschicht vorgesehen ist, in dieser Reihenfolge laminiert sind, wobei
die erste Schutzschicht aus einer durch ionisierende Strahlung härtbaren Harzzusammensetzung gebildet ist, die ein polyfunktionelles Polycarbonat(meth)acrylat enthält, und wobei der dekorative Harzformartikel eine dritte Schutzschicht umfasst, die unter der ersten Schutzschicht vorgesehen ist, wobei die dritte Schutzschicht aus einer durch ionisierende Strahlung härtbaren Harzzusammensetzung gebildet ist.

14. Verfahren zum Herstellen eines dekorativen Harzformteils, wobei das Verfahren umfasst:
einen Integrationsschritt des Einlegens der Dekorfolie nach einem der Ansprüche 1 bis 12 in eine Spritzgussform, Schließen der Spritzgussform und Einspritzen eines verflüssigten Harzes in die Spritzgussform, um das Harz mit der Dekorfolie zu integrieren.

## Revendications

1. Feuille décorative comprenant au moins une couche de matériau de base, une première couche protectrice et une deuxième couche protectrice fournie sur une partie de la première couche protectrice dans cet ordre, dans laquelle
la première couche protectrice est formée d'une composition de résine durcissable par rayonnement ionisant contenant un (méth)acrylate de polycarbonate polyfonctionnel, et la feuille comprenant une troisième couche protectrice fournie sous la première couche protectrice, la troisième couche protectrice étant formée d'une composition de résine durcissable par rayonnement ionisant.

2. Feuille décorative selon la revendication 1, dans laquelle la teneur en (méth)acrylate de polycarbonate polyfonctionnel dans la composition de résine durcissable par rayonnement ionisant est supérieure ou égale à 50 % en masse.

3. Feuille décorative selon la revendication 1 ou 2, dans laquelle la composition de résine durcissable par rayonnement ionisant contient en outre un (méth)acrylate d'uréthane polyfonctionnel.

4. Feuille décorative selon la revendication 3, dans laquelle le rapport massique du (méth)acrylate de polycarbonate polyfonctionnel au (méth)acrylate d'uréthane polyfonctionnel est compris dans une plage de 50:50 à 99:1.

5. Feuille décorative selon l'une quelconque des revendications 1 à 4, dans laquelle le (méth)acrylate de polycarbonate polyfonctionnel a un poids moléculaire moyen en poids supérieur ou égal à 10 000, tel que mesuré selon le procédé indiqué dans la description.

6. Feuille décorative selon l'une quelconque des revendications 1 ou 5, dans laquelle la deuxième couche protectrice est formée d'une composition de résine durcissable par rayonnement ionisant contenant un (méth)acrylate de polycarbonate polyfonctionnel.

7. Feuille décorative selon l'une quelconque des revendications 1 à 6, dans laquelle la première couche protectrice a une épaisseur de 0,1 à 20 µm.

8. Feuille décorative selon l'une quelconque des revendications 1 à 7, dans laquelle la deuxième couche protectrice a une épaisseur de 0,1 à 20 µm.

9. Feuille décorative selon l'une quelconque des revendications 1 à 8, dans laquelle la première couche protectrice contient au moins soit des particules inorganiques, soit des particules de résine.

10. Feuille décorative selon l'une quelconque des revendications 1 à 9, dans laquelle la deuxième couche protectrice contient au moins soit des particules inorganiques, soit des particules de résine.

11. Feuille décorative selon l'une quelconque des revendications 1 à 10, comprenant en outre une couche à motif entre la couche de matériau de base et la première couche protectrice.

12. Feuille décorative selon la revendication 11, dans laquelle une forme d'évidement formée par une partie qui est dotée de la deuxième couche protectrice et une partie qui n'est pas dotée de la deuxième couche protectrice est mise en correspondance avec un motif de la couche à motif sur la première couche protectrice.

13. Article décoratif moulé en résine comprenant un corps stratifié dans lequel au moins une couche de résine moulée, une couche de matériau de base, une première couche protectrice et une deuxième couche protectrice fournie sur une partie de la première couche protectrice sont stratifiées dans cet ordre, dans lequel
la première couche protectrice est formée d'une composition de résine durcissable par rayonnement ionisant contenant un (méth)acrylate de polycarbonate polyfonctionnel, et l'article décoratif moulé en résine comprenant une troisième couche protectrice fournie sous la première couche protectrice, la troisième couche protectrice étant formée d'une composition de résine durcissable par rayonnement ionisant.

14. Procédé de production d'un article décoratif moulé en résine, le procédé comprenant :
une étape d'intégration consistant à insérer la feuille décorative selon l'une quelconque des revendications 1 à 12 dans une matrice de moulage par injection, à fermer la matrice de moulage par injection et à injecter une résine fluidisée dans la matrice de moulage par injection pour intégrer la résine à la feuille décorative.
